# EUROPÄISCHE PATENTSCHRIFT

(11) **EP 0 630 718 B1**
(45) Veröffentlichungstag und Bekanntmachung des Hinweises auf die Patenterteilung: **14.08.1996**
(21) Anmeldenummer: 94107619.2
(22) Anmeldetag: 17.05.1994
(51) Int. Cl.: B23H 11/00

(54) **Funkenerosionsmaschine mit Dielektrikumsbehälter**
Working tank for electroerosion machine
Bac d'usinage pour machine d'usinage par électro-érosion

(30) Priorität: 21.06.1993 DE 4320530
(43) Veröffentlichungstag der Anmeldung: 28.12.1994
(73) Patentinhaber: AG für industrielle Elektronik AGIE Losone bei Locarno, CH-6616 Losone/Locarno (CH)
(72) Erfinder: Lodettio, Attilio, CH-6616 Losone (CH)
(74) Vertreter: von Samson-Himmelstjerna, Friedrich R., Dipl.-Phys.

(56) Entgegenhaltungen:
- DE-A- 2 540 664

## Beschreibung

Die Erfindung betrifft eine Funkenerosionsmaschine mit einem im wesentlichen hohlzylinderartigen Dielektrikumsbehälter, dessen Seitenwand wenigstens Zwei in Richtung des Zylinderumfanges aufeinanderfolgende Wandabschnitte aufweist.

Bei der Senkerosion erfolgt die elektroerosive Bearbeitung und dielektrische Spülung entweder innerhalb eines rundum geschlossenen oder in einem nach oben hin offenen Behälter, der ganz oder teilweise mit einem Bad aus einer dielektrischen Flüssigkeit gefüllt ist (Dieleleketrikumsbehälter).

Zur Gewährleistung einer guten Spülfunktion wird das Dielektrikum in einer Filteranlage von den Abtragsteilchen seiner Elektroden (Werkstück und Senkelektrode) gereinigt und gekühlt. Pump- und/oder Saugeinrichtungen sorgen für die Zu- und Ableitung des Dielektrikums in den bzw. aus dem Dielektrikumsbehälter.

Eine wichtige Anforderung an einen guten Dielektrikumsbehälter besteht in der leichten Zugänglichkeit des Arbeitsbereiches.

Aus dem Stand der Technik sind bereits Funkenerosionsmaschinen mit Dielektrikumsbehältern verschiedenster Bauart bekannt, die jedoch zumeist nur einen sehr eingeschränkten Zugang zum Arbeitsbereich gewährleisten oder recht aufwendig konstruiert sind.

Aus der DE-A 33 03 758 (SCHIESS) ist eine Funkenerosionsmaschine bekannt, bei der die vordere Wand eines vertikalen Maschinenständers gleichzeitig die stationäre Rückwand und die Maschinentischplatte gleichzeitig den Boden eines rechtwinkligen Dielektrikumsbehälters bilden. Die übrigen Wandabschnitte des Dielektrikumsbehälters sind vertikal verschiebbar. Eine derartige Maschine gewährleistet - bei abgesenktem Dielektrikumsbehälter - einen sehr guten Zugang zur Maschinentischplatte, was einer Automatisierung des Arbeitsablaufs entgegenkommt, ist aber relativ aufwendig in ihrer Konstruktion. Bei anderen in dieser Schrift beschriebenen Ausführungsformen sind nur einzelne Wandelemente des Dielektrikumbehälters, etwa dessen Tür horizontal oder vertikal verschiebbar oder über Scharniere ein- oder mehrseitig aufklappbar. Als bevorzugte Dichtungselemente werden Blähdichtungen verwendet. Die in der DE-A-33 03 758 beschriebenen Dielektrikumsbehälter mit verschieblichen oder aufklappbaren Türen erfordern einen relativ geringen Konstruktionsaufwand, ermöglichen aber nur einen sehr begrenzten Zugang zur Maschinentischplatte und stören die Übersicht über die Elektroerosionsmaschine (oder -anlage). Dies verhindert wiederum einen zügigen Verarbeitungsablauf.

Die DE-C-34 44 390 (AGIE) beschreibt eine gegenüber der DE-A-33 03 758 verbesserte Funkenerosionsmaschine mit einer ebenfalls absenkbaren Dielektrikumswanne.

Aus der EP 0 347 716 (AEG) ist eine Funkenerosionsmaschine mit einem zieharmonikaartigen Faltbehälter als Dielektrikumsbehälter bekannt. Dieser Dielektrikumsbehälter erfordert ebenfalls eine vergleichsweise aufwendige Konstruktion. Im übrigen erfordert diese Konstruktion einen großen Platzbedarf in vertikaler Richtung und bewirkt daher eine Erhöhung der Entfernung zwischen Maschinentischführungen und der Arbeitsfläche, was wiederum die Genauigkeit der Bearbeitung beeinträchtigt.

Aus der US-A-3,647,669 (KELSO), der DE-A-32 46 776 (DAIMLER), der EP-A-0 132 935 (INOUE), der FR-A-2 069 863 (AMSTED) sowie der FR-A-2 589 375 (RENAULT) sind Funkenerosionsmaschinen mit im wesentlichen zylindrischen und seitlich rundum geschlossenen Dielektrikumsbehältern bekannt. Die Zugänglichkeit dieser Dielektrikumsbehälter ist allerdings sehr beschränkt, da die Seitenwände nicht geöffnet werden können.

Die DE-A-25 40 664 (LANGMATZ) zeigt eine gattungsgemäße Funkenerosionsmaschine, die ebenfalls einen zylindrischen Dielektrikumsbehälter aufweist. Die Wand des Behälters ist mit Hilfe von Magneten am Behälterboden befestigbar. Ein aufblasbarer Schlauch dient zur Abdichtung des Behälters. Nach einer in dieser Schrift dargestellten Variante besteht der Behälter aus einzelnen Teilen, die mittels einer Hammerkopfverbindung zusammengesetzt werden können.

Bei der elektroerosiven Bearbeitung besteht neben den Anforderungen an Abtragsleistung, Genauigkeit der Erosion und Oberflächengüte des bearbeiteten Werkstückes die ständige Notwendigkeit, die Erosion so weit wie möglich zu automatisieren und Maschinenstillstände zu minimieren. Ein schlecht handhabbarer Dielektrikumsbehälter kann das Bestücken und "Umrüsten" der Maschine während des Maschinenstillstandes behindern und verlängern.

Die vorliegende Erfindung zielt darauf ab, die Handhabung von Funkenerosionsmaschinen mit Dielektrikumsbehältern zu vereinfachen.

Die Erfindung erreicht dieses Ziel durch den Gegenstand des Anspruches 1.

Eine erfindungsgemäße Funkenerosionsmaschine weist demnach einen im wesentlichen hohlzylinderartigen Dielektrikumsbehälter auf, dessen Seiten wenigstens zwei in Umfangsrichtung des Zylinders relativ gegeneinander verschiebliche Wandabschnitte hat.

Die Erfindung schafft damit eine Funkenerosionsmaschine mit einem besonders unkompliziert handhabbaren Dielektrikumsbehälter, der eine sehr gute Zugänglichkeit des Arbeitsbereiches grundsätzlich ermöglicht. Besteht die Seitenwand, d.h. der Zylindermantel, aus genau zwei Wandabschnitten, läßt sich eine Zugänglichkeit von bis zu 180° (gemessen als Zentriwinkel des Hohlzylinders) - bei mehr als zwei Wandabschnitten sogar noch mehr - erreichen. Zum Öffnen und Verschliessen des Behälters werden einfach die Wandabschnitte des Behälters relativ gegen- bzw. zueinander in Umfangsrichtung verschoben. Dies hat neben dem Vorteil einer einfachen Konstruktion auch noch den Vorzug, daß die Wandabschnitte auch bei offenem Behälter, also in ihrer verschobenen Position nicht über den Behälterumfangsbereich vorstehen. Der Begriff "zylinderartig" bezieht sich beispielsweise auch Ausführungsformen, deren Behälter in Draufsicht einer Kreisform angenähert sind (z.B. Achteck).

Nach einem besonders einfachen und daher bevorzugten Ausführungsbeispiel der Erfindung sind die Wandabschnitte als Halbzylinder ausgebildet (Anspruch 2). Werden diese Wandabschnitte relativ zueinander um 180° verschoben, steht dem Benutzer die Möglichkeit offen, im Arbeitsbereich praktisch ohne seitliche Beschränkungen des Dielektrikumsbehälters tätig zu sein.

Bei einer weiteren besonders bevorzugten Variante der Erfindung sind die Wandabschnitte parallel gegeneinander verschieblich (Anspruch 3). Mit dieser Variante der Erfindung kann einer der Wandabschnitte, welcher einen etwas geringeren Durchmesser als der andere Halbzylinder-Wandabschnitt aufweist, quasi "in" den anderen Wandabschnitt geschoben werden. Der besondere Vorteil besteht darin, daß der "Türabschnitt" des Dielektrikumsbehälters im geöffneten Zustand keinen separaten Platz beansprucht und die Zugänglichkeit des Arbeitsbereiches nicht behindert. Auch kann von der Tür des Dielektrikumsbehälters im geöffneten Zustand nicht mehr unbeabsichtigt Dielektrikum abtropfen. Der Platzbedarf wird minimiert. Der Behälter ist ferner auch billiger als ein abnehmbarer Behälter nach dem Stand der Technik.

Bei einer weiteren Variante der Erfindung ist einer der Wandabschnitte starr in einer in den Boden des Dielektrikumsbehälters eingelassenen Führungsnut befestigt oder befestigbar (Anspruch 4). Entsprechend ist bei einer weiteren Variante der Erfindung wenigstens einer der Wandabschnitte in der Führungsnut verschieblich geführt (Anspruch 5). Eine Führungsnut gewährleistet eine sichere Verschieblichkeit der Wandabschnitte und schafft damit eine wichtige Voraussetzung für eine automatische Bedienung des Dielektrikumsbehälters.

Besonders vorteilhaft ist es, wenn zwar beide Wandabschnitte in einer (oder zwei) Führungsnut(en) rundum verdrehbar sind, einer der Wandabschnitte aber in einer beliebigen Drehwinkelstellung am Behälterboden befestigbar bzw. fixierbar ist. Die Richtung der Behälteröffnung läßt sich damit bei verschiedenen Maschinentypen problemlos verstellen, ohne das eine Neukonstruktion des Behälters notwendig wird. Beispielsweise kann für eine "normale" Anlage der Zugang vorne liegen, während für eine automatische Maschine mit Roboterbeschickung ev. eine Öffnung zur Seite gewählt wird. Die Maschinenkonstruktion und die Abmessung der gesamten Anlage brauchen nicht verändert zu werden.

Ähnliche Vorteile ergeben sich bei einer weiteren, in Anspruch 6 angegebenen Variante der Erfindung. Dabei ist der gesamte Dielektrikumsbehälter relativ zum Maschinentisch verdrehbar.

Nach einer weiteren besonders bevorzugten Ausführungsform der Erfindung erfolgt die Steuerung des Behälters über eine CNC bzw. über einen Steuerungsrechner (siehe Anspruch 7). Zwar ist es mittlerweile bei Werkzeugmaschinen üblich, mehr und mehr Funktionen zu automatisieren. Eine umfassende Automatisierung der Behälterfunktion(en) mit geringem Aufwand ist jedoch im Grunde erstmals mit Hilfe des besonders sicher geführten und praktisch handhabbaren Dielektrikumsbehälters der Erfindung möglich.

Bei weiteren besonders bevorzugten Varianten der Erfindung ist der verschiebliche Wandabschnitt auf Kufen, auf Gleitführungen oder auf Rollen geführt (Ansprüche 8, 9 und 10). Damit wird eine besonders leichte Verschieblichkeit dieses Wandabschnittes gewährleistet.

Weiterhin sind bevorzugt aufblasbare und/oder feste Dichtungen zwischen den einzelnen Behälterelementen. Insbesondere aufblasbare Dichtungen kombinieren eine leichte Handhabbarkeit mit einer sicheren Dichtwirkung.

Bei einer anderen Weiterbildung der Erfindung ist an den verschieblichen Wandabschnitt ein Motorantrieb angeschlossen (Anspruch 13). Ein besonderer Vorteil des neuartigen Dielektrikumsbehälters liegt in seinen Automatisierungsmöglichkeiten, die durch einen Motorantrieb unkompliziert realisierbar sind.

Dabei ist es vorteilhaft, wenn zwischen den Motor und den verschieblichen Wandabschnitt ein Seiltrieb mit einer Rolle mit einer Mehrfachumschlingung des Seiles geschaltet ist (Anspruch 14). Damit wird der Antrieb des verschieblichen Wandabschnittes mit einfachsten Mitteln realisiert.

Weitere Vorteile und bevorzugte Ausführungen der Erfindung ergeben sich aus der nachfolgenden Beschreibung der Ausführungsbeispiele, die auch schematisch in der beigefügten Zeichnung dargestellt sind. In der Zeichnung zeigen:
- Fig. 1: eine schematische perspektivische Ansicht einer ersten Ausführungsform der erfindungsgemäßen Elektroerosions-Schneidevorrichtung;
- Fig. 2a: eine schematische Draufsicht auf ein zweites Ausführungsbeispiel;
- Fig. 2b: einen Schnitt längs der Linie A-A aus Fig. 2a;
- Fig. 3: eine schematische perspektivische Ansicht eines dritten Ausführungsbeispiels;
- Fig. 4: eine schematische perspektivische Ansicht eines vierten Ausführungsbeispiels;
- Fig. 5: eine schematische perspektivische Ansicht eines fünften Ausführungsbeispiels;
- Fig. 6: eine schematische perspektivische Ansicht eines sechsten Ausführungsbeispiels;

Im folgenden wird eine Terminologie verwendet, die der leichteren Lesbarkeit der Beschreibung dient, jedoch nicht einschränkend zu verstehen ist. Beispielsweise beziehen sich die Ausdrücke oben, unten, schmaler, breiter auf Maschinen üblicher Arbeitsaufstellung und Größe sowie auf in üblicher Weise angeordnete Werkstücke.

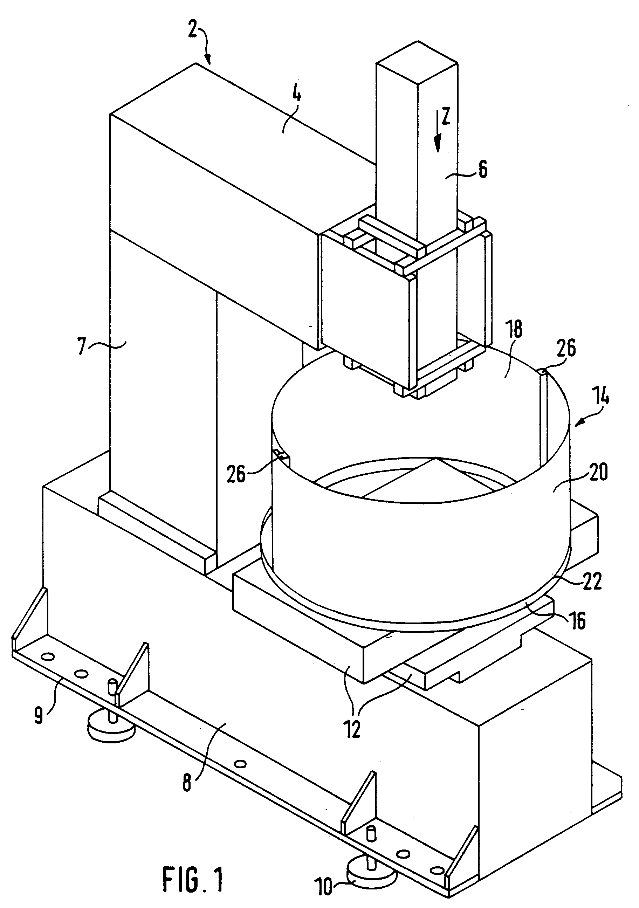

In Fig. 1 ist eine Elektroerosions-Senkmaschine 2 zum funkenerosiven Bearbeiten eines (nicht dargestellten) Werkstückes dargestellt. Fig. 1 beschränkt sich der Übersichtlichkeit halber auf eine Darstellung hier interessierender Teile einer Senkerosionsmaschine. Grundelemente wie Spülsystem, Generator sowie NC- oder CNC-Rechnersteuerung sind nicht dargestellt, da sie als bekannt vorausgesetzt werden.

Das dargestellte Ausführungsbeispiel der Erfindung ist nach Art einer C-Gestellmaschine aufgebaut. An einem oberen Schenkel 4 ist eine in Z-Richtung verschiebliche Pinole 6 angeordnet, an deren Unterseite eine Senkelektrode zur Bearbeitung eines Werkstückes befestigbar ist.

Der obere Schenkel 4 ist über einen hinteren Schenkel 7 mit einem unteren Schenkel 8 verbunden, an dessen unterer Kante eine Schiene 9 mit Fußelementen 10 befestigt ist. Auf dem unteren Schenkel 8 ist ferner ein in X-/Y-Richtung verschieblicher Maschinentisch 12 befestigt. Auf dem Maschinentisch 12 ist ein zylindrischer Dielektrikumsbehälter 14 angeordnet.

Der zylindrische Dielektrikumsbehälter 14 weist einen Boden 16 sowie zwei halbzylindrische (bzw. in Draufsicht halbrunde) Wandabschnitte 18, 20 auf. Während der Wandabschnitt 18 am Boden 16 des Behälters 14 befestigt ist, ist der Wandabschnitt 20 parallel zum Wandabschnitt 18 verschieblich geführt.

Beide Wandabschnitte 18, 20 sind in eine ringförmige Führungsnut 22 gesetzt. Damit läßt sich die Richtung der Behälteröffnung problemlos je nach Wunsch beliebig variieren.

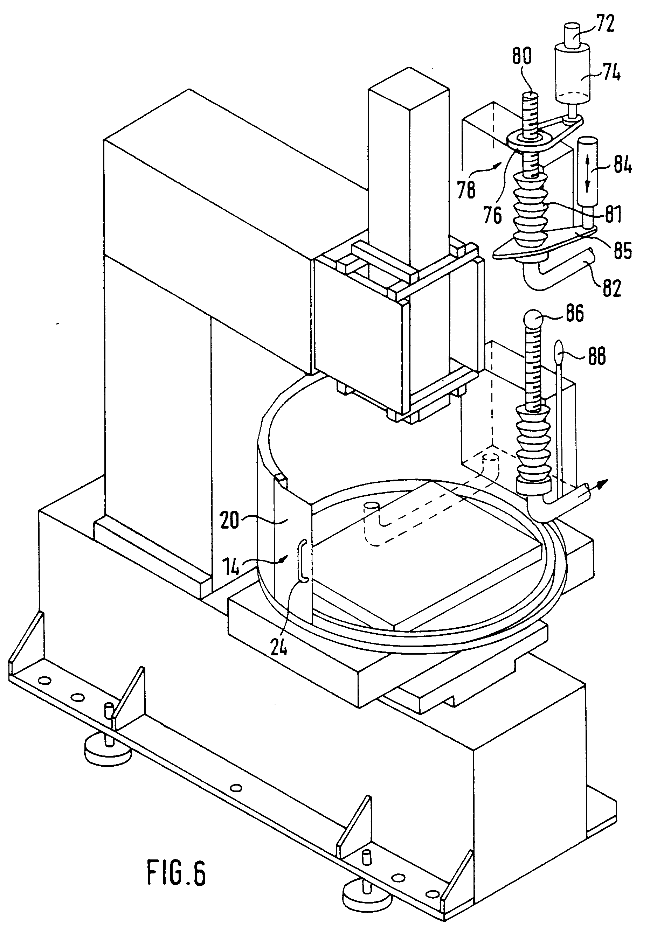

Das Öffnen und Schliessen des Behälters erfolgt mit Hilfe eines (in der Fig. 1 verdeckten) Griffes 24 (siehe auch Fig. 6). Aufblasbare Dichtungen 26 (auch Blähdichtungen genannt) dichten die beiden Wandabschnitte 18 und 20 gegeneinander ab.

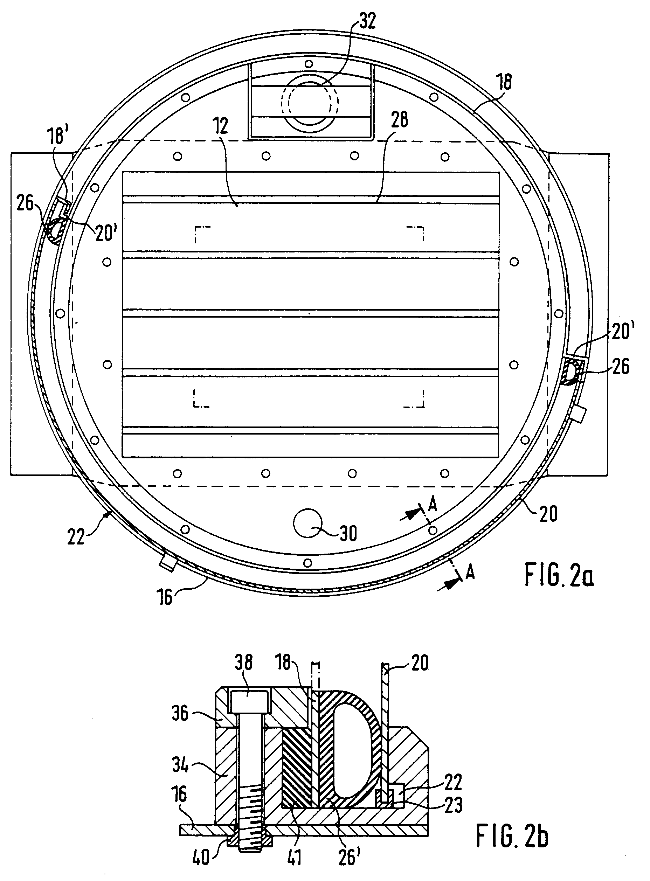

Fig. 2a zeigt eine Draufsicht auf Maschinentisch 12 und Behälter 14 eines weiteren Ausführungsbeispiels. Der Wandabschnitt 20 hat einen etwas größeren Radius als der Wandabschnitt 18. An ihren Endseiten greifen die Wandabschnitte 18 und 20 über umgeknickte Endabschnitte 18' und 20' ineinander ein. Zu erkennen sind ferner eine Spannpalette 28 zum Aufspannen eines Werkstückes sowie Dielektrikumszu- und ableitungen 30, 32.

Fig. 2b veranschaulicht die Anordnung der Wandabschnitte 18 und 20 sowie eine Dichtungsanordnung 26' in der Führungsnut 22. Die Führungsnut 22 ist in einer auf dem Boden 16 befestigte Ringschiene 34 ausgebildet, die über ein Element 36 und eine Schraube 38 mit Mutterelement 40 am Behälterboden 16 befestigt ist. Die Wandabschnitte 18 und 20 sind gegeneinander und gegen die Schiene 34 über die Blähdichtung 26' und eine feste Dichtung 41 abgedichtet. Der Abschitt 20 läuft auf einem Gleitstück 23.

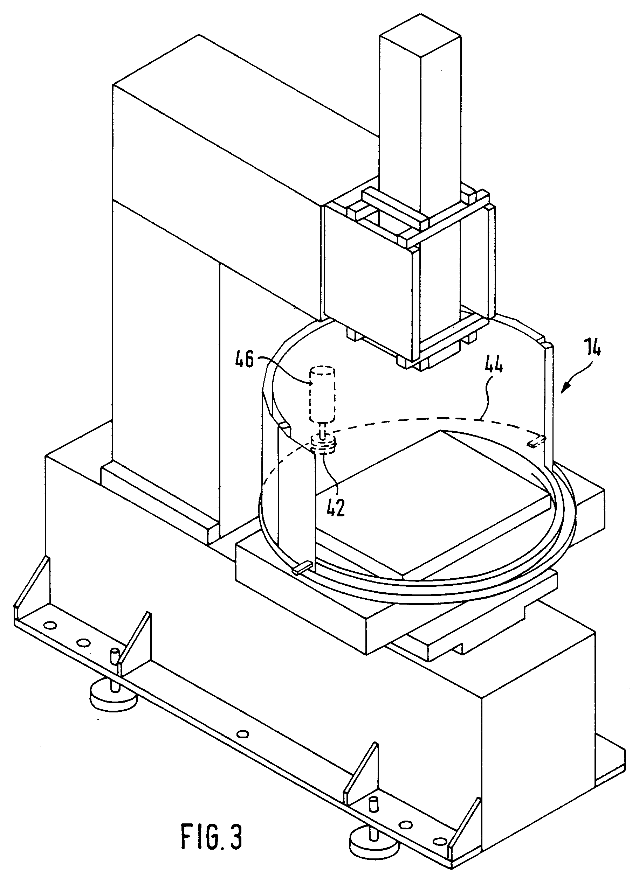

Fig. 3 zeigt eine Rolle 42, die doppelt von einem Seil 44 aus Metall oder Kunststoff umwickelt ist. Über einen Motor 46 ist der Dielektrikumsbehälter 14 damit unkompliziert automatisch öffen- und schließbar. Fig. 3 zeigt den Behälter 14 im geöffneten Zustand und verdeutlicht damit die praktisch unbehinderte Zugänglichkeit des Arbeitsbereiches.

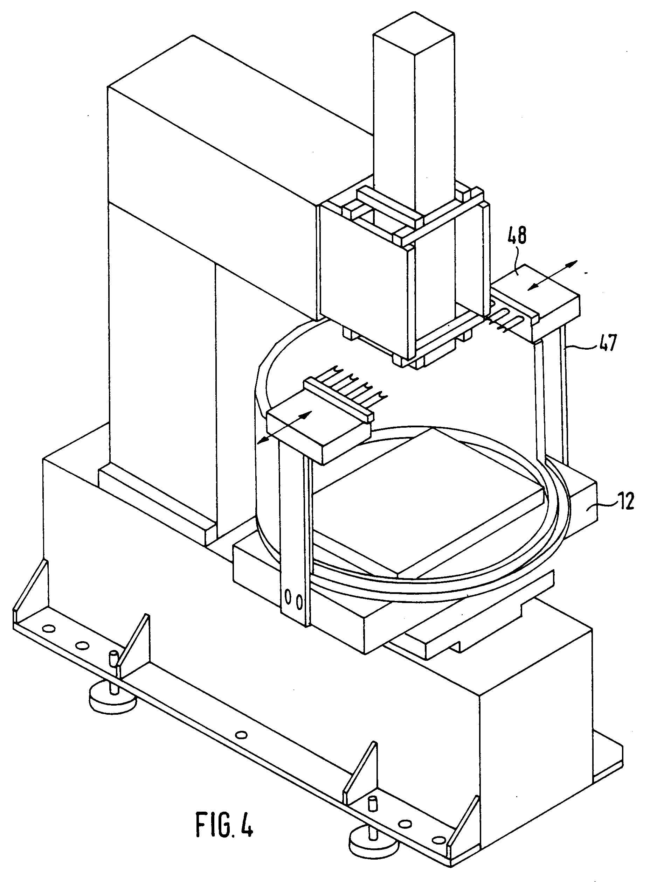

Fig. 4 veranschaulicht darüberhinaus die Möglichkeit, den Behälter 14 in einfacher Weise mit einem über Seitenstützen 47 am Maschinentisch 12 befestigten Linearmagazin 48 für Elektroden zu kombinieren.

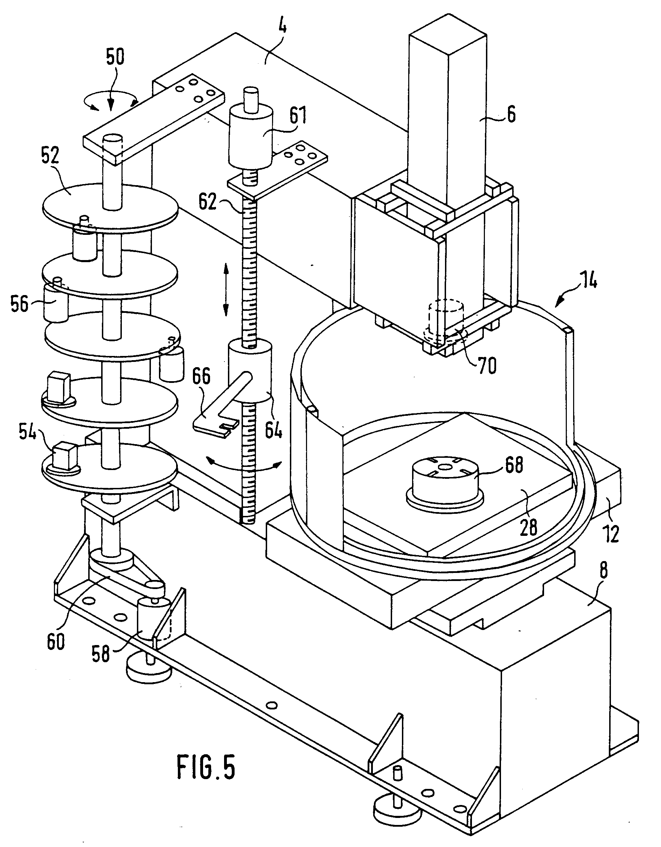

Fig. 5 zeigt eine praktisch "vollkommen" automatisierte Variante der Erfindung. Ein an den unteren und oberen Schenkeln 4, 8 der Maschine 2 befestigtes Rundmagazin 50 weist in mehreren zueinander vesetzten Ebenen Scheiben 52 auf, an denen Werkstücke 54 und/oder Elektroden 56 angeordnet werden können (Fassung: ca. 50 Plätze). Das Rundmagazin 50 wird über einen Motor 58 mit Riemenantrieb 60 angetrieben. Auf einer motorgetriebenen (Motor 61) Gewinde- oder Zahnstange 62 läuft ein Zylinder 64 mit Innengewinde (oder einem Innengezähne), an dem eine (niveauregulierte) Schwenkzange 66 angebracht ist. Die Zange 66 dient zum automatischen Bestücken einer automatischen Teile- und/oder Werkstückzange 68 auf der Palette 28 des Maschinentisches 12 sowie zum automatischen Bestücken einer an der Pinole 6 befestigten automatischen Elektrodenzange 70. Nicht dargestellt ist das an sich noch sinnvolle Schwenken des Behälters 14 um 90° nach links. Ein (nicht dargestellter) CNC-Anschluß ermöglicht eine voll automatisierte Ablaufsteuerung.

Fig. 6 zeigt eine Version einer erfindungsgemäßen Maschine mit einer Nivauregulierungeinheit mit Ablauf. Zum manuellen Öffnen des Behälters 14 dient der Griff 24.

Die (rechts oben noch mal versetzt in automatisierter Version dargestellte) Niveauregulierungseinheit besteht aus einem über einen Encoder 72 angesteuerten Motor 74, der über einen Riemen 76 und eine Untersetzung 78 eine Zahn(oder Gewinde)stange 80 treibt, an die ein Balg 81 angeschlossen ist, welcher wiederum mit einem Ablauf 82 in Verbindung steht, an den noch ein zusätzlicher Luft- oder Ölzylinder 84 angeschlossen ist. Der an den Behälterablauf angeschlossene Gummibalg 81 wird über die Gewindestange 80 zusammen- und auseinandergefahren, wodurch das Dielektrikumsniveau im Behälter regulierbar ist. Der Luftzylinder 84 dient zur Schnellentleerung. Er greift hierzu an einer Dichtungsplatte 85 an, die in dichtendem Eingriff mit dem unteren Rand des Balges 81 steht. In Ruhestellung drückt der Zylinder 84 die Dichtungsplatte 85 gegen die behälterseitige Öffnung des Ablaufs 82 und dichtet diese hierdurch ab. Zur Schnellentleerung zieht der Zylinder 84 die Dichtungsplatte 85 samt Balg 81 nach oben.

Die Gewindestange 80 kann alternativ auch manuell über einen Knauf oder Drehgriff 86 gedreht werden (Bildmitte). In diesem Fall dient ein Hebel 88 zur Schnellentleerung.

## Patentansprüche

1. Funkenerosionsmaschine (2) mit einem im wesentlichen hohlzylinderartigen Dielektrikumsbehälter (14), dessen Seitenwand wenigstens zwei in Richtung des Zylinderumfanges aufeinanderfolgende Wandabschnitte (18, 20) aufweist,
dadurch gekennzeichnet, daß
die Wandabschnitte (18, 20) in Umfangsrichtung relativ gegeneinander verschieblich sind.

2. Funkenerosionsmaschine nach Anspruch 1, dadurch gekennzeichnet, daß die Wandabschnitte (18, 20) im wesentlichen als Halbzylinder ausgebildet sind.

3. Funkenerosionsmaschine nach Anspruch 1 oder 2, dadurch gekennzeichnet, daß die Wandabschnitte (18, 20) parallel gegeneinander verschieblich sind.

4. Funkenerosionsmaschine nach einem der vorstehenden Ansprüche, dadurch gekennzeichnet, daß einer der Wandabschnitte (18) starr in einer in den Boden des Dielektrikumsbehälters eingelassenen Führungsnut (22) befestigt oder befestigbar ist.

5. Funkenerosionsmaschine nach einem der vorstehenden Ansprüche, dadurch gekennzeichnet, daß wenigstens einer der Wandabschnitte (20) in der Führungsnut (22) verschieblich geführt ist.

6. Funkenerosionsmaschine nach einem der vorstehenden Ansprüche, dadurch gekennzeichnet, daß der gesamte Dielektrikumsbehälter (14) relativ zum Maschinentisch verdrehbar ist.

7. Funkenerosionsmaschine nach einem der vorstehenden Ansprüche, dadurch gekennzeichnet, daß der Behälter (14) an eine CNC-Steuerung angeschlossen ist.

8. Funkenerosionsmaschine nach einem der vorstehenden Ansprüche, dadurch gekennzeichnet, daß der verschiebliche Wandabschnitt (20) auf Kufen geführt ist.

9. Funkenerosionsmaschine nach einem der vorstehenden Ansprüche, dadurch gekennzeichnet, daß der verschiebliche Wandabschnitt (20) auf Gleitführungen (23) geführt ist.

10. Funkenerosionsmaschine nach einem der vorstehenden Ansprüche, dadurch gekennzeichnet, daß der verschiebliche Wandabschnitt (20) auf Rollen geführt ist.

11. Funkenerosionsmaschine nach einem der vorstehenden Ansprüche, dadurch gekennzeichnet, daß zwischen den einzelnen Behälterelementen (18, 20, 34, 16) aufblasbare und/oder feste Dichtungen (26, 26', 40) angeordnet sind.

12. Funkenerosionsmaschine nach Anspruch 11, dadurch gekennzeichnet, daß auch die Wandabschnitte (18, 20) gegeneinander mittels aufblasbarer und/oder einer fester Dichtungen (26', 40) abgedichtet sind.

13. Funkenerosionsmaschine nach einem der vorstehenden Ansprüche, dadurch gekennzeichnet, daß an den verschieblichen Wandabschnitt (20) ein Motorantrieb (46) angeschlossen ist.

14. Funkenerosionsmaschine nach Anspruch 13, dadurch gekennzeichnet, daß zwischen den Motor (46) und den verschieblichen Wandabschnitt (20) ein Seiltrieb geschaltet ist, der eine mehrfach von einem Seil (44) umschlungene Rolle (42) aufweist.

15. Funkenerosionsmaschine nach einem der vorstehenden Ansprüche, gekennzeichnet durch eine Niveauregulierungseinheit mit gewindegetriebenem Balg (81).

## Claims

1. An electrical discharge machine (2) having a dielectric container (14) substantially in the manner of a hollow cylinder, the side wall of which comprises at least two wall portions (18, 20) following one another in the direction of the periphery of the cylinder,
**characterised in that** the wall portions (18, 20) can be displaced towards one another in the peripheral direction.

2. An electrical discharge machine according to Claim 1,
**characterised in that** the wall portions (18, 20) are constructed substantially as half-cylinders.

3. An electrical discharge machine according to Claim 1 or 2,
**characterised in that** the wall portions (18, 20) are displaceable parallel to one another.

4. An electrical discharge machine according to one of the preceding Claims,
**characterised in that** one of the wall portions (18) is or can be attached securely in a guide groove (22) embedded in the bottom of the dielectric container.

5. An electrical discharge machine according to one of the preceding Claims,
**characterised in that** at least one of the wall portions (20) is displaceably guided in the guide groove (22).

6. An electrical discharge machine according to one of the preceding Claims,
**characterised in that** the entire dielectric container (14) can be twisted relative to the table.

7. An electrical discharge machine according to one of the preceding Claims,
**characterized in that** the container (14) is connected to a CNC control.

8. An electrical discharge machine according to one of the preceding Claims,
**characterised in that** the dsplaceable wall portion (20) is guided on runners.

9. An electrical discharge machine according to one of the preceding Claims,
**characterised in that** the displaceable wall portion (20) is guided on sliding guides (23).

10. An electrical discharge machine according to one of the preceding Claims,
**characterised in that** the displaceable wall portion (20) is guided on rollers.

11. An electrical discharge machine according to one of the preceding Claims,
**characterised in that** inflatable and/or solid seals (26, 26', 40) are disposed between the individual components (18, 20, 34, 16) of the container.

12. An electrical discharge machine according to Claim 11,
**characterised in that** the wall portions (18, 20) are also sealed from one another by means of inflatable seals and/or a solid seal (26', 40).

13. An electrical discharge machine according to one or the preceding Claims,
**characterised in that** a motor drive (46) is connected to the displaceable wall portion (20).

14. An electrical discharge machine according to Claim 13,
**characterised in that** a rope drive, which comprises a roller (42) around which a rope (44) is wound several times, is positioned between the motor (46) and the displaceable wall portion (20).

15. An electrical discharge machine according to one of the preceding Claims,
**characterised by** a level regulating unit having thread-driven bellows (81).

## Revendications

1. Machine d'usinage par électroérosion ou étincelage (2) comprenant un bac diélectrique ayant à peu près la forme d'un cylindre creux (14) dont la paroi latérale présente au moins deux parties de paroi (18, 20) successives suivant la direction de la circonférence du cylindre,
caractérisée
en ce que les parties de paroi (18, 20) sont mobiles l'une par rapport à l'autre suivant la direction circonférentielle

2. Machine d'usinage par électroérosion ou étincelage selon le revendication 1, caractérisée en ce que les parties de paroi (18, 20) sont constituées à peu près comme un demi-cylindre.

3. Machine d'usinage par électroérosion ou étincelage selon le revendication 1 ou 2, caractérisée en ce que les parties de paroi (18, 20) sont mobiles en étant parallèles l'une par rapport à l'autre.

4. Machine d'usinage par électroérosion ou étincelage selon l'une quelconque des revendications précédentes, caractérisée en ce qu'une des parties de paroi (18) est fixée ou fixable de façon rigide dans une rainure de guidage (22) encastrée au fond du bac diélectrique.

5. Machine d'usinage par électroérosion ou étincelage selon l'une quelconque des revendications précédentes, caractérisée en ce que au moins une des parties de paroi (20) est guidée de façon mobile dans la rainure de guidage (22).

6. Machine d'usinage par électroérosion ou étincelage selon l'une quelconque des revendications précédentes, caractérisée en ce que le bac diélectrique (14), dans sa totalité, est mobile en torsion par rapport à la table de la machine.

7. Machine d'usinage par électroérosion ou étincelage selon l'une quelconque des revendications précédentes, caractérisée en ce que le bac diélectrique (14), est connecté à une commande numérique par calculateur (CNC).

8. Machine d'usinage par électroérosion ou étincelage selon l'une quelconque des revendications précédentes, caractérisée en ce que la partie de paroi mobile (20) est guidée sur des patins.

9. Machine d'usinage par électroérosion ou étincelage selon l'une quelconque des revendications précédentes, caractérisée en ce que la partie de paroi mobile (20) est guidée sur des éléments de coulisse (23).

10. Machine d'usinage par électroérosion ou étincelage selon l'une quelconque des revendications précédentes, caractérisée en ce que la partie de paroi mobile (20) est guidée sur des rouleaux.

11. Machine d'usinage par électroérosion ou étincelage selon l'une quelconque des revendications précédentes, caractérisée en ce que des joints gonflablez et/ou fixes (26, 26', 40) sont disposés entre les différents éléments du bac (18, 20, 34, 16).

12. Machine d'usinage par électroérosion ou étincelage selon la revendication 11, caractérisée en ce que les parties de paroi (18, 20), également, sont rendues étanches l'une par rapport à l'autre au moyen de joints gonflablez et/ou d'un joint fixe (26', 40).

13. Machine d'usinage par électroérosion ou étincelage selon l'une quelconque des revendications précédentes, caractérisée en ce qu'une commande d'entraînement à moteur (46) est connectée à la partie de paroi mobile (20).

14. Machine d'usinage par électroérosion ou étincelage selon la revendication 13, caractérisée en ce qu'une transmission par câble est couplée entre le moteur (46) et la partie de paroi mobile (20), laquelle transmission par câble présente un rouleau (42) entouré plusieurs fois par un càble (44).

15. Machine d'usinage par électroérosion ou étincelage selon l'une quelconque des revendications précédentes, caractérisée par une unité de régulation de niveau équipée d'un soufflet (81) entraîné par un élément fileté.
